# EUROPÄISCHE PATENTANMELDUNG

(11) **EP 2 061 001 A1**
(43) Veröffentlichungstag der Anmeldung: **20.05.2009**
(21) Anmeldenummer: 07120462.2
(22) Anmeldetag: 12.11.2007
(51) Int. Cl.: G06Q 20/00

(54) **Zahlungsverfahren, Zahlungssystem und dazu geeignete Vorrichtungen**

(71) Anmelder: Swisscom (Schweiz) AG, 3050 Bern (CH); Microtronic AG, 4702 Oensingen (CH)
(72) Erfinder: Wahli, Bernard, 6300, Zug (CH); Kummernuss, Thomas, 3145, Niederscherli (CH)
(74) Vertreter: Scheuzger, Beat Otto

(57) **Zusammenfassung**

Die Erfindung betrifft ein Zahlungsverfahren zur Bezahlung von Produkten und/oder Dienstleistungen. Ein Point-of-Sale umfasst ein Dienstterminal (2) und ein Benutzer wählt Produkte und/oder Dienstleistungen am Point-of-Sale zum Kauf aus. Es werden Kreditbelegsdaten eines Belegsdatenspeichers (151) eines mobilen Endgeräts (1) des Benutzers über Nahbereichs-Schnittstellen (11,21) an das Dienstterminal (2) übertragen. Auf dem Dienstterminal (2) werden aufgrund der Kreditbelegsdaten und aufgrund der zum Kauf ausgewählten Produkte und/oder Dienstleistungen Abbuchungsdaten erstellt. Die Abbuchungsdaten werden vom Dienstterminal (2) über die Nahbereichs-Schnittstellen (21,11) an das mobile Endgerät (1) übertragen. Aufgrund der Übermittlung der Abbuchungsdaten wird mittels des Dienstterminals (2) ein Signal für die Freigabe der zum Kauf ausgewählten Produkte und/oder Dienstleistungen eingeschaltet.

## Beschreibung

### Technisches Gebiet

Die vorliegende Erfindung bezieht sich auf ein Zahlungsverfahren, auf ein Zahlungssystem und auf dazu geeignete Vorrichtungen. Insbesondere betrifft die vorliegende Erfindung ein Zahlungsverfahren zur Bezahlung von Produkten und/oder Dienstleistungen an einem Point-of-Sale umfassend ein Dienstterminal, wobei ein Benutzer Produkte und/oder Dienstleistungen zum Kauf auswählt, und wobei mittels des Dienstterminals ein Signal zur Freigabe der gekauften Produkte- und/oder Dienstleistungen eingeschaltet wird.

### Stand der Technik

Im Stand der Technik sind Zahlungsverfahren zur Bezahlung von Produkten- und/oder Dienstleistungen welche an einem Point-of-Sale angeboten werden bekannt. Solche Zahlungsverfahren können auf Bargeld, auf Kreditkarten, auf Debitkarten, auf vorbezahlten (prepaid) Karten, auf Gutscheinen usw. basieren. Insbesondere die bargeldlose Bezahlung von Produkten- und/oder Dienstleistungen hat in den vergangenen Jahren immer mehr an Bedeutung gewonnen. So ist es heutzutage möglich, in Supermärkten oder anderen Geschäften die Bezahlung eines Einkaufs mittele einer Kreditkarte oder Debitkarte aufgrund eines elektronischen Zahlungsverfahrens, oder - mit anderen Worten - aufgrund einer elektronischen Transaktion, durchzuführen. Dazu ist am Verkaufspunkt, oder wie dieser häufiger genannt wird am Point-of-Sale, also im Supermarkt, in einem Geschäft oder bei einem Verkaufsautomaten eine Vorrichtung oder ein Dienstterminal angebracht, in welche eine Kreditkarte oder eine Debitkarte eingeführt werden kann und bei welcher ein PIN (PIN: Personal Identification Number) eingegeben werden kann. Aufgrund von auf der Kreditkarte oder der Debitkarte abgespeicherten Daten und aufgrund des PIN wird mittels einer Telekommunikationsverbindung zu einer Zentrale ein elektronisches Zahlungsverfahren durchgeführt und es wird ein Geldwertbetrag vom Konto des Käufers eines Produkts oder einer Dienstleistung auf ein Konto des Anbieters des Produkts oder der Dienstleistung übertragen. Um die Sicherheit eines solchen Zahlungsverfahrens zu gewährleisten, muss bei jeder Transaktion eine Kommunikationsverbindung zwischen dem Dienstterminal und einer Zentrale erstellt werden. In vielen Fällen ist die Erstellung eines entsprechenden Kommunikationsnetzwerks mit beträchtlichen Installationskosten verbunden. Zudem kann die Erstellung einer Kommunikationsverbindung wegen einer Überlastung des Kommunikationsnetzwerks oder anderen technischen Gründen zu einer beträchtlichen Verzögerung des Zahlungsverfahrens führen, sodass beispielsweise in einem Supermarkt ein elektronisches Zahlungsverfahren auch heute noch oft beträchtlich langsamer abgewickelt wird als eine Bezahlung mit Bargeld.

Im Stand der Technik sind auch Point-of-Sales bekannt, welche einen Verkaufsautomaten umfassen und der Ausgabe oder Auslieferung von Produkten oder Dienstleistungen dienen. Ein Konsument kann an einem Verkaufsautomaten mit Zahlungsmitteln wie Bargeld oder Kreditkarte beispielsweise Produkte wie einen Snack, ein Getränk oder Süssigkeiten beziehen. Der Konsument kann an bestimmten Verkaufsautomaten auch Berechtigungen für den Bezug von Dienstleistungen, wie beispielsweise eine Fahrkarte für die Benutzung eines öffentlichen Verkehrsmittels wie einem Zug oder Bus, eine Parkkarte für das Parkieren eines Fahrzeugs in einer Parkzone oder ein Wertcode für das Aufladen eines Prepaid-Kontos eines Telekommunikationsanbieters, beziehen. Verkaufsautomaten für die Abgabe oder Ausgabe von Produkten oder Dienstleistungen umfassen beispielsweise auch Zeitungsautomaten, Benzinzapfsäulen, Fotoautomaten, Briefmarkenautomaten, Zugangsautomaten bei Toiletteneinrichtungen, Automaten für die Abgabe von Videos oder Computerspielen, öffentliche Telefonsprechzellen oder Spielautomaten in Spielhallen. Verkaufsautomaten können eingerichtet sein, um ein einzelnes Produkt oder eine einzelne Dienstleistung anzubieten, wie dies beispielsweise bei einem Kaffeeautomaten oder bei einem Ticketautomaten in einem Bus der Fall sein kann. Verkaufsautomaten können auch eingerichtet sein, um eine grosse Vielzahl von Produkten und/oder Dienstleistungen anzubieten, wie dies beispielsweise bei einem Automaten für Snacks und Getränke an einem Bahnhof oder bei einem Fahrkartenautomaten an einer Bushaltestelle der Fall sein kann. Verkaufsautomaten sind deshalb so praktisch, weil diese mit einem geringen Personalaufwand betrieben werden können - beispielsweise durch ein regelmässiges Nachfüllen des Automaten mit Produkten - und dem Konsumenten mit einem geringen personellen Überwachungsaufwand während 24 Stunden am Tag zur Verfügung stehen können. Für die Bezahlung der Produkte oder Dienstleistungen sind Verkaufsautomaten mit Mitteln zur Entgegennahme von Bargeld oder anderen Zahlungsmitteln ausgerüstet. So kann ein Getränkeautomat beispielsweise über Mittel zur Entgegennahme von Münzen verfügen, ein Billetautomat kann über Mittel zur Entgegennahme von Münzen oder Geldscheinen verfügen oder eine öffentliche Telefonsprechzelle kann über Mittel zur Entgegennahme einer Telefonkarte verfügen. Beispielsweise bei Billetautomaten oder bei Benzinzapfsäulen ist auch die Bezahlung mit Kreditkarte oder einer Bankkontokarte weit verbreitet. Damit ein Verkaufsautomat für die Bezahlung mit Kreditkarte oder Bankkontokarte vorbereitet ist, muss der Verkaufsautomat allerdings über ein Kommunikationsnetzwerk mit einer Zentrale verbunden werden. Dies hat den Nachteil, dass die Erstellung eines solchen Kommunikationsnetzwerks mit beträchtlichen Installationskosten verbunden sein kann. Um eine verteilte Anordnung von Verkaufsautomaten entsprechend auszurüsten können deshalb sehr hohe Investitionen erforderlich sein.

In der Patentschrift EP 1 281 137 wird ein Transaktionsverfahren beschrieben, bei welchem ein Kunde kostenpflichtige Produkte an einem Dienstterminal beziehen kann. Über eine kontaktlose Schnittstelle wird vom Dienstterminal ein Selektionsprogramm an ein Mobilgerät des Kunden übermittelt. Der Kunde wählt auf dem Mobilgerät ein Produkt aus, worauf eine Dienstterminalidentifizierung und eine Objektidentifizierung vom Mobilgerät an eine Zentrale übermittelt wird. Auf der Zentrale wird die Kreditwürdigkeit des Kunden geprüft. Über eine Kommunikationsverbindung wird von der Zentrale ein Kreditbeleg und eine Objektidentifizierung an das Dienstterminal übermittelt. Das Dienstterminal gibt das gewählte Produkt aus und übermittelt einen Kostenbetrag an die Zentrale, welche den Kostenbetrag verrechnet. Es ist ein Nachteil dieses Transaktionsverfahrens, dass zwischen dem Dienstterminal und der Zentrale eine Kommunikationsverbindung eingerichtet werden muss.

In der Patentschrift EP 1 245 010 wird ein Verkaufsautomat beschrieben, wobei eine dedizierte Verbindung zwischen dem Verkaufsautomaten und einem Finanzinstitut nicht vorhanden ist. Ein Server empfängt von einem Mobiltelefon über ein Mobilfunknetz eine Anforderung für den Kauf eines Produkts. Der Server erzeugt einen Verkaufscode und übermittelt den Verkaufscode an das Mobiltelefon. Der Verkaufscode wird vom Mobiltelefon an einen lokalen Empfänger des Verkaufsautomaten gesendet und aufgrund des Verkaufscodes wird eine Einrichtung zur Abgabe des Produkts freigeschaltet. Es ist ein Nachteil dieses Verfahrens, dass für den Kauf eines Produkts zwischen dem Mobiltelefon und einer Zentrale eine Kommunikationsverbindung verfügbar sein muss. Das Einrichten eines entsprechenden Mobilfunknetzes ist jedoch beispielsweise in Parkhäusern oder in Untergeschossen von Gebäuden oft mit einem beträchtlichen Aufwand verbunden.

### Darstellung der Erfindung

Es ist eine Aufgabe der vorliegenden Erfindung, ein neues Zahlungsverfahren, ein neues Zahlungssystem und dazu geeignete Vorrichtungen für die Bezahlung von Produkten und/oder Dienstleistungen vorzuschlagen, welche nicht die Nachteile des Standes der Technik aufweisen. Das neue Zahlungsverfahren, das neue Zahlungssystem und die dazu geeigneten Vorrichtungen sollen insbesondere die rasche Bezahlung von Produkten oder Dienstleistungen mit einem mobilen Endgerät an einem Dienstterminal eines Point-of-Sale ermöglichen, ohne dass zwischen dem Dienstterminal und einer Zentrale ein Kommunikationsnetzwerk eingerichtet werden muss und ohne dass zum Zeitpunkt der Bezahlung von Produkten oder Dienstleistungen zwischen dem mobilen Endgerät und einer Zentrale ein Kommunikationsnetzwerk verfügbar sein muss.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass Kreditbelegsdaten eines Belegsdatenspeichers eines mobilen Endgeräts vom mobilen Endgerät über eine Nahbereichs-Schnittstelle des mobilen Endgeräts an eine Nahbereichs-Schnittstelle des Dienstterminals übertragen werden, dass auf dem Dienstterminal aufgrund der Kreditbelegsdaten und aufgrund der zum Kauf ausgewählten Produkte und/oder Dienstleistungen Abbuchungsdaten erstellt werden, dass die Abbuchungsdaten vom Dienstterminal über die Nahbereichs-Schnittstellen an das mobile Endgerät übertragen werden, und dass aufgrund der Übermittlung der Abbuchungsdaten mittels des Dienstterminals ein Signal für die Freigabe der zum Kauf ausgewählten Produkte und/oder Dienstleistungen eingeschaltet wird. Ein solches Verfahren hat insbesondere den Vorteil, dass das Dienstterminal an kein Kommunikationsnetzwerk angeschlossen werden muss und somit bestehende Dienstterminal eines Point-of-Sale, also z.B. bestehende Verkaufsautomaten, einfach für ein Zahlungsverfahren aufgerüstet werden können. Zudem ist das Zahlungsverfahren relativ sicher, da die Kreditbelegsdaten beispielsweise verschlüsselt im Belegsdatenspeicher des mobilen Endgeräts abgespeichert werden können. Das Zahlungsverfahren hat zudem den Vorteil, dass die Transaktion anonym erfolgen kann und dass der Benutzer des mobilen Endgeräts seine Identität gegenüber dem Dienstterminal des Point-of-Sale oder gegenüber dem Verkaufsautomaten nicht offenlegen muss. Das Verfahren ist ausserdem auch geeignet, um die Bezahlung von Produkten und/oder Dienstleistungen in einem System mit mehreren Anbietern oder Providern von Produkten und/oder Dienstleistungen auszuführen. Das Verfahren kann zudem auch dann durchgeführt werden, wenn die Netzverbindung zu einem Mobilfunknetz am Standort des Dienstterminals des Point-of-Sale oder am Standort des Verkaufsautomaten nicht vorhanden ist oder wenn die Energieversorgung des mobilen Endgeräts zur Erstellung einer Kommunikationsverbindung zu einem Mobilfunknetz entladen oder ausgeschaltet ist. Der Informationsaustausch mit einer Zentrale zu einer weiteren Abrechnung der Abbuchungsdaten, also beispielsweise zur Gutschrift eines Geldwertbetrags an einen Anbieter von Produkten oder Dienstleistungen, kann auf einen späteren Zeitpunkt verlegt werden, bei welchem beispielsweise über ein Mobilfunknetz eine Kommunikationsverbindung zwischen dem mobilen Endgerät und der Zentrale erstellt wird. Die Kreditbelegsdaten können in einer solchen Art aufgebaut sein, dass durch das Dienstterminal aufgrund der Kreditbelegsdaten die Bonität überprüft werden kann und beispielsweise der Kauf von Produkten und/oder Dienstleistungen eingeschränkt oder ganz gesperrt werden kann.

In einer Ausführungsvariante werden die Kreditbelegsdaten und/oder die Abbuchungsdaten mindestens teilweise mittels eines auf dem Dienstterminal abgespeicherten elektronischen Schlüssels entschlüsselt und/oder verschlüsselt. Das auf dem mobilen Terminal aufgeladene Guthaben kann verschlüsselt als Image abgespeichert sein. Die Verschlüsselung respektive der Verschlüsselungsalgorithmus kann so gewählt sein, dass es ohne einen Supercomputer mit einer sehr hohen Rechenleistung nicht möglich ist, das Guthaben oder andere im Image verschlüsselt abgespeicherten Daten zu entschlüsseln oder anzugreifen. Das verschlüsselte Image kann nur auf zwei Arten verändert werden. Einerseits kann das Image über die Nahbereichs-Schnittstellen auf das Dienstterminal übertragen werde und dort entschlüsselt werden, wobei beispielsweise ein Geldwertbetrag von einem im Image abgespeicherten Guthaben abgebucht werden kann. Das Image kann danach wieder verschlüsselt und an das mobile Endgerät zurückübertragen werden. Andererseits kann das Image beispielsweise über ein durch das mobile Endgerät zugreifbare Mobilfunknetz an eine Zentrale übermittelt und dort entschlüsselt werden. Auch auf der Zentrale kann das entschlüsselte Image je nach Bedarf modifiziert werden und verschlüsselt wieder an das mobile Endgerät zurückübertragen werden. Ein solches Verfahren hat insbesondere den Vorteil, dass der Zugriff durch das mobile Endgerät auf die Kreditbelegsdaten gesperrt ist und somit eine Manipulation der Kreditbelegsdaten auf dem mobilen Endgerät verhindert werden kann. Dabei können die Kreditbelegsdaten zwischen dem mobilen Endgerät und einem Anbieter von Kreditbelegsdaten, z.B. für eine Nachladung von Kreditbelegsdaten, beispielsweise blockweise übertragen werden. Auch die Übertragung von Kreditbelegsdaten zwischen dem mobilen Endgerät und dem Dienstterminal des Point-of-Sale kann blockweise erfolgen, beispielsweise über eine Nahbereichsschnittstelle gemäss dem RFID Standard ISO 14443 Level 3.

In einer anderen Ausführungsvariante werden Kreditbelegsdaten umfassend eine Kontoinformation eines Geldkontos und/oder umfassend einen Geldbetragswert eines Guthabenkontos verwendet. Ein solches Verfahren hat insbesondere den Vorteil, dass je nach Bedarf ein Prepaid Verfahren oder ein Postpaid Verfahren angewendet werden kann. Wie erwähnt kann insbesondere mit einem Prepaid Verfahren ein vollkommen anonymes Zahlungsverfahren durchgeführt werden.

In einer weiteren Ausführungsvariante werden Abbuchungsdaten umfassend zumindest Teile der Kreditbelegsdaten verwendet. So können die verschlüsselten Kreditbelegsdaten beispielsweise ein Guthabenkonto umfassen. Auf dem Dienstterminal können die verschlüsselten Kreditbelegsdaten entschlüsselt werden und es kann ein Geldwertbetrag vom Guthabenkonto abgebucht werden. Die entschlüsselten Kreditbelegsdaten mit dem abgebuchten Guthabenkonto können anschliessend wieder verschlüsselt werden und den Abbuchungsdaten angehängt werden. Sobald die Abbuchungsdaten mit den erneut verschlüsselten Kreditbelegsdaten auf das mobile Endgerät übertragen werden, können die erneut verschlüsselten Kreditbelegsdaten im Belegsdatenspeicher abgespeichert werden und es können gegebenenfalls bestehende Kreditbelegsdaten durch die erneut verschlüsselten Kreditbelegsdaten ersetzt werden. Ein solches Verfahren hat insbesondere den Vorteil, dass das das Zahlungsverfahren relativ sicher als Prepaid Verfahren ausgestaltet werden kann.

In einer weiteren Ausführungsvariante werden Abbuchungsdaten umfassend eine Anbieteridentifikation verwendet, wobei zumindest Teile der Abbuchungsdaten vom mobilen Endgerät bei einer Verfügbarkeit eines Kommunikationsnetzwerks an eine Zentrale übermittelt werden, und wobei mittels der Zentrale aufgrund der mindestens Teile der Abbuchungsdaten ein Geldbetragswert einem Konto des der Anbieteridentifikation entsprechenden Produkt- und/oder Dienstanbieters gutgeschrieben wird. Die Anbieteridentifikation kann beispielsweise eine Identifikation des Dienstterminals und/oder eine Identifikation von Produkten oder Dienstleistungen umfassen. Ein solches Verfahren hat insbesondere den Vorteil, dass den an Dienstterminals getätigten Käufen entsprechende Geldwerte an verschiedene Anbieter gutgeschrieben werden können. Zudem kann die Gutschrift von Geldwerten zu einem Zeitpunkt ausgelöst werden, bei dem die Verfügbarkeit eines Kommunikationsnetzwerks wie z.B. eines Mobilfunknetzwerks zwischen dem mobilen Endgerät und der Zentrale besonders gut gewährleistet ist, beispielsweise in Bezug auf die Stabilität der Verbindung zwischen dem mobilen Endgerät und dem Mobilfunknetzwerk oder beispielsweise in Bezug auf die Auslastung des Mobilfunknetzwerks.

In einer anderen Ausführungsvariante werden Abbuchungsdaten umfassend eine Produkt- und/oder Dienstleistungsidentifikation, eine Zeitangabe, eine Transaktionsidentifikation und/oder eine Kreditbelegsdatenidentifikation verwendet. Selbstverständlich können zusätzliche Daten in Bezug auf den Kauf eines Produkts oder einer Dienstleistung mit den Abbuchungsdaten übermittelt werden. Ein solches Verfahren hat insbesondere den Vorteil, dass in der Zentrale ein Logbuch oder ein Trackingsystem für die Auswertung von Käufen von Produkten und/oder Dienstleistungen geführt werden kann. So kann beispielsweise der Bestand von Produkten eines Verkaufsautomaten überwacht werden und somit die Lagerbewirtschaftung von Produkten optimiert werden, indem beispielsweise ein Servicetechniker genau mit den benötigten Produkten und genau zu dem benötigten Zeitpunkt zur Nachfüllung von Produkten des Verkaufsautomaten aufgeboten werden kann.

In einer weiteren Ausführungsvariante werden aufgrund der Übermittlung der Abbuchungsdaten zusätzliche, zumindest teilweise unverschlüsselte Informationsdaten vom Dienstterminal an das mobile Endgerät übermittelt. Solche Informationsdaten können beispielsweise einen aktuellen Kontostand eines Prepaid Kontos umfassen. Die Übermittlung der Informationsdaten kann beispielsweise gemäss dem RFID Standard ISO 14443 Level 4 erfolgen. Ein solches Verfahren hat insbesondere den Vorteil, dass dem Benutzer des mobilen Endgeräts Informationen in Bezug auf den getätigten Kauf oder Statusmeldungen des Dienstterminals direkt angezeigt werden können.

In einer weiteren Ausführungsvariante wird ein elektronischer Katalog mit verfügbaren Produkten und/oder Dienstleistungen über die Nahbereichs-Schnittstelle vom Dienstterminal an das mobile Endgerät übermittelt. Ein solches Verfahren hat insbesondere den Vorteil, dass der Benutzer des mobilen Endgeräts die Selektion eines Produkts und/oder einer Dienstleistung sehr bequem mittels des mobilen Endgeräts durchführen kann.

In einer anderen Ausführungsvariante werden Inhaberdaten betreffend des Inhabers des mobilen Endgeräts und/oder eine Identifikation des mobilen Endgeräts vom mobilen Endgerät über die Nahbereichs-Schnittstellen an das Dienstterminal übermittelt. Ein solches Verfahren hat insbesondere den Vorteil, dass Informationen über den Benutzer, welcher Produkte und/oder Dienstleistungen kaufen möchte, überprüft werden können. So kann beispielsweise der Kauf von Zigaretten oder Alkohol für Personen, welche ein bestimmtes Alter noch nicht erreicht haben, gesperrt werden. Oder es kann an einem Fahrkartenautomaten für Jugendliche automatisch ein entsprechender Jugendtarif verwendet werden.

In einer anderen Ausführungsvariante wird als Nahbereichs-Schnittstelle eine NFC (Near Field Communication) Schnittstelle, eine RFID (Radio Frequency Identification) Schnittstelle, eine Bluetooth Schnittstelle und/oder eine IrDA (Infrared Data Association) Schnittstelle verwendet. Ein solches Verfahren hat insbesondere den Vorteil, dass bekannte, robuste und weit verbreitete Technologien für die Erstellung einer Nahbereichs-Schnittstelle verwendet werden können.

In einer anderen Ausführungsvariante werden zumindest Teile der Kreditbelegsdaten und/oder zumindest Teile der Abbuchungsdaten einer Identifikation des mobilen Endgeräts (1) zugeordnet in einem Speichermodul des Verkaufsautomaten (2) abgespeichert. Ein solches Verfahren hat insbesondere den Vorteil, dass die Auslieferung von Produkten und/oder Dienstleistungen protokolliert werden kann, um beispielsweise zu einem späteren Zeitpunkt die von der Zentrale durchgeführten Gutschriften zu Gunsten eines Anbieters zu überprüfen.

### Kurze Beschreibung der Zeichnungen

Nachfolgend werden Ausführungsvarianten der vorliegenden Erfindung anhand von Beispielen beschrieben. Die Beispiele der Ausführungen werden durch folgende beigelegten Figuren illustriert:
Figur 1 zeigt ein schematisches Blockdiagram eines erfindungsgemässen Zahlungssystems für die Bezahlung von Produkten und/oder Dienstleistungen.
Figur 2 zeigt ein Flussdiagram eines Zahlungsverfahrens für die Bezahlung von Produkten und/oder Dienstleistungen.

### Wege zur Ausführung der Erfindung

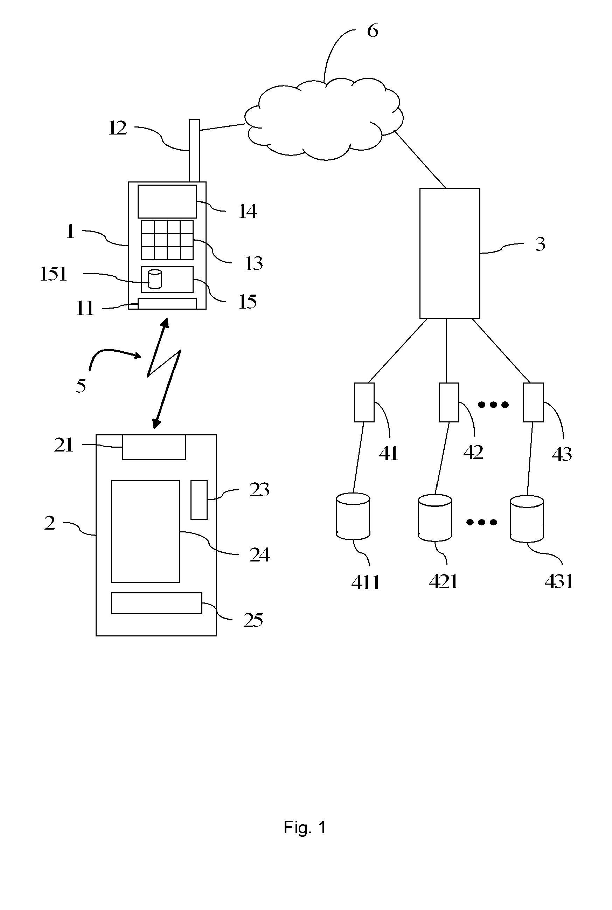

In Figur 1 bezieht sich das Bezugszeichen 1 auf ein mobiles Endgerät. Beim mobilen Endgerät 1 kann es sich zum Beispiel um ein Mobilfunktelefon, um einen Personal Digital Assistant (PDA), um einen Notebook Computer, um einen MP3-Player wie z.B. einen iPod mit einer WiFi-Schnittstelle oder um irgendein anderes mobiles, persönliches Endgerät handeln. Das mobile Endgerät 1 umfasst Mobilfunkmittel zur Kommunikation über ein Mobilfunknetz oder über ein WiFi-Netz. In Figur 1 sind diese Mobilfunkmittel mit dem Bezugszeichen 12 schematisch als Antenne dargestellt. Die Mobilfunkmittel 12 umfassen alle erforderlichen Hardware- und Softwaremodule, damit mit dem mobilen Endgerät 1 über ein Mobilfunknetz eine Kommunikationsverbindung aufgebaut werden kann. Solche Hardware- und Softwaremodule umfassen insbesondere Antennen, Modulatoren, Kodiermittel sowie Prozessoren um Datenübertragungsprotokolle zu steuern. Die Mobilfunkmittel 12 sind im Stand der Technik bekannt. Die Mobilfunkmittel 12 können eingerichtet sein, um beispielsweise über ein GSM Mobilfunknetz (GSM: Global System for Mobile Communications), über ein UMTS Mobilfunknetz (UMTS: Universal Mobile Telecommunications System), über ein satellitenbasiertes Mobilfunknetz oder über irgendein anderes Mobilfunknetz eine Kommunikationsverbindung für die Übertragung von elektronischen Daten zu erstellen. Anstelle der Mobilfunkmittel 12 oder zusätzlich zu den Mobilfunkmittel 12 kann das mobile Endgerät 1 irgendeine andere Schnittstelle, beispielsweise eine Ethernet-Schnittstelle oder eine USB Schnittstelle (USB: Universal Serial Bus), zur Erstellung einer Kommunikationsverbindung über ein Kommunikationsnetzwerk umfassen.

In Figur 1 bezieht sich das Bezugszeichen 11 auf eine Nahbereichs-Schnittstelle. Bei der Nahbereichs-Schnittstelle 11 kann es sich um eine NFC Schnittstelle (NFC: Near Field Communication), um eine RFID Schnittstelle (RFID: Radio Frequency Identification), um eine Bluetooth Schnittstelle, um eine IrDA Schnittstelle (IrDA Infrared Data Association) oder um irgendeine andere Nahbereichs-Schnittstelle handeln. Über die Nahbereichs-Schnittstelle 11 kann eine Nahbereichs-Kommunikationsverbindung zu einer entsprechenden Nahbereichs-Schnittstelle aufgebaut werden. Über eine solche Nahbereichs-Kommunikationsverbindung können elektronische Daten übertragen werden.

In einer Ausführungsvariante können für die Mobilfunkmittel 12 und die Nahbereichs-Schnittstelle 11 Schnittstellen von derselben Technologie verwendet werden, beispielsweise WiFi-Schnittstellen oder irgendwelche andere Schnittstellen welche dazu geeignet sind, sowohl als Mobilfunkmittel 12 als auch als Nahbereichs-Schnittstelle 11 verwendet zu werden.

In Figur 1 bezieht sich das Bezugszeichen 13 auf Eingabemittel des mobilen Endgeräts und das Bezugszeichen 14 auf Anzeigemittel des mobilen Endgeräts. Beispielsweise können die Eingabemittel 13 die Tasten eines Mobilfunktelefons, die Tastatur eines Notebook Computers wird irgendwelche andere Eingabemittel sein. Zum Beispiel können die Anzeigemittel 14 den Display eines Mobilfunktelefons, der Bildschirm eines Notebook Computers oder irgendein anderes Anzeigemittel sein.

In Figur 1 bezieht sich das Bezugszeichen 15 auf Elektronikmittel, welche für das nachfolgend dargestellte Zahlungsverfahren und Zahlungssystem verwendet werden. Die Elektronikmittel 15 können verschiedene Hardware- und Softwaremodule umfassen. So können die Elektronikmittel 15 insbesondere umfassen: einen oder mehrere Prozessoren für die Abarbeitung eines Softwareprogramms, Speichermittel für die Abspeicherung von Betriebssystemsoftware sowie Applikationssoftware und Identifikationsmittel für die Identifikation eines Benutzers gegenüber dem mobilen Endgerät und für die Identifikation des mobilen Endgeräts gegenüber einem Mobilfunknetz. Die Elektronikmittel 15 können vom Benutzer entfernbare Mittel - wie beispielsweise eine SIM Karten (SIM: Subscriber Identification Modul) oder eine Speicherkarte - oder Mittel welche mit dem mobilen Endgerät 1 fest verbunden sind, umfassen. Die Elektronikmittel 15 können beispielsweise statt einer entfernbaren SIM Karte fest verdrahtete Identifikationsmittel zur Identifikation des mobilen Endgeräts 1 und/oder zur Identifikation des Benutzers dieses mobilen Endgeräts 1 umfassen. Die Elektronikmittel 15 können insbesondere einen Belegsdatenspeicher 151 zur Abspeicherung von Kreditbelegsdaten umfassen. Die Kreditbelegsdaten können beispielsweise verschlüsselte Datenstrukturen umfassen. Ein Kreditbelegsdatensatz kann beispielsweise als XML Datensatz oder in irgendeiner anderen Weise strukturiert sein. So kann ein Kreditbelegsdatensatz beispielsweise als 512 Byte Datensatz, als 1024 Byte Datensatz oder als Datensatz von irgendeiner anderen Grösse aufgebaut sein. Der Belegsdatenspeicher 151 kann entsprechend eingerichtet sein, um einen oder mehrere Kreditbelegsdatensätze von einer bestimmten Grösse oder von unterschiedlichen Grössen abzuspeichern.

In Figur 1 bezieht sich das Bezugszeichen 2 auf ein Dienstterminal eines Point-of-Sale, beispielsweise auf einen Verkaufsautomaten zur Abgabe von Snacks oder Getränke oder beispielsweise auf ein Dienstterminal zur Bezahlung von Einkäufen in einem Supermarkt. Das Dienstterminal 2 kann beispielsweise ein Angebotsmodul 24 für die Aufnahme oder für die Präsentation von Produkten und/oder Dienstleistungen umfassen. Das Angebotsmodul 24 kann beispielsweise bei einem Getränkeautomaten Mittel für die Lagerung, Kühlung, Zubereitung oder Erhitzung von Getränken umfassen. Das Angebotsmodul 24 kann bei einem Automaten für die Abgabe von Videos beispielsweise DVD Disks (DVD: Digital Versatile Disc) und/oder Videokassetten umfassen. Das Angebotsmodul 24 kann beispielsweise bei einem Fahrkartenautomaten einen Bildschirm für die menugesteuerte Selektion einer Fahrkarte umfassen. Das Angebotsmodul 24 kann auch nur aus einem einfachen Display zur Anzeige von kurzen Texten oder zur Anzeige von einem Menusystem bestehen. Das Angebotsmodul 24 kann ferner irgendwelche andere Einrichtungen für das Anbieten von Produkten und/oder Dienstleistungen umfassen. In Figur 1 bezieht sich das Bezugszeichen 25 auf ein Ausgabemodul. Das Ausgabemodul 25 kann bei einem Getränkeautomaten Mittel für die Halterung eines Bechers oder für die Ausgabe einer Getränkeflasche umfassen. Das Ausgabemodul 25 kann bei einem Automaten für die Abgabe von Videos Mittel für die von einem Benutzer bequem zugreifbare kurzzeitige Lagerung von DVD Disks oder Videokassetten umfassen. Das Ausgabemodul 25 kann beispielsweise bei einem Fahrkartenautomaten einen Schlitz für die Ausgabe einer Fahrkarte umfassen. Das Ausgabemodul 25 kann bei einer öffentlichen Toilette beispielsweise ein Drehkreuz für einen kontrollierten Zugang umfassen. Das Ausgabemodul 25 kann auch nur aus einem einfachen Display zur Anzeige von kurzen Texten oder zur Anzeige von einem Menusystem bestehen. Für den Fall dass auch das Angebotsmodul 24 aus einem Display besteht, kann dasselbe Display für das Angebotsmodul 24 und das Ausgabemodul 25 verwendet werden. Das Ausgabemodul 25 kann ferner irgendwelche andere Einrichtungen für die Ausgabe von Produkten und/oder Dienstleistungen umfassen.

In Figur 1 bezieht sich das Bezugszeichen 23 auf ein Selektions- und Bezahlmodul. Das Selektions- und Bezahlmodul 23 kann eine Tastatur umfassen, um Produkte und/oder Dienstleistungen des Verkaufsautomaten auszuwählen. Das Selektions- und Bezahlmodul 23 kann Mittel umfassen, um Münzen oder Geldscheine entgegenzunehmen. Es ist hier bemerkt, dass das erfindungsgemässe Zahlungsverfahren und Zahlungssystem so eingerichtet sein kann, dass auf das üblicherweise an einem Verkaufsautomaten angebrachte Selektions- und Bezahlmodul 23 vollständig verzichtet werden kann. Dies kann insbesondere durch eine später beschriebene Übertragung eines elektronischen Produktkatalogs vom Verkaufsautomaten 2 auf das mobile Endgerät 1 erreicht werden.

In Figur 1 bezieht sich das Bezugszeichen 21 auf eine Nahbereichs-Schnittstelle. Die Nahbereichs-Schnittstelle 21 ist eingerichtet, um mit der Nahbereichs-Schnittstelle 11 des mobilen Endgeräts eine Nahbereichs-Kommunikationsverbindung aufzubauen, sodass zwischen dem mobilen Endgerät 1 und dem Verkaufsautomaten 2 Daten ausgetauscht werden können.

In Figur 1 bezieht sich das Bezugszeichen 5 auf die erwähnte Nahbereichs-Kommunikationsverbindung.

Um das erfindungsgemässe Zahlungsverfahren durchzuführen, umfassen die Elektronikmittel 15 einen Belegsdatenspeicher 151. Der Belegsdatenspeicher 151 kann wie erwähnt eingerichtet sein, um Kreditbelegsdaten abzuspeichern. Der Belegsdatenspeicher 151 kann beispielsweise als Datenstruktur eines Softwareprogramms eingerichtet sein. Dazu umfassen die Elektronikmittel 15 zunächst Speichermittel für die Abspeicherung eines Betriebssystems, wie z.B. eines Palm OS, eines Symbian OS oder eines Windows CE, sowie Prozessormittel und Hardwareschnittstellen für eine lauffähige Hardwareumgebung des Betriebssystems. Das Softwareprogramm mit dem erwähnten Belegsdatenspeicher 151 kann als in diesem Betriebssystem lauffähige Applikation ausgebildet sein. Selbstverständlich kann der Belegsdatenspeicher 151 auch als Datenstruktur oder als Programm- oder Datencode irgendeines kommerziell erhältlichen Systems, wie eines Mifare-Systems, eines Legic-Systems oder eines Felica-Systems, auf irgendeinem Speichermittel des mobilen Endgeräts ausgebildet sein, beispielsweise kann der Belegsdatenspeicher 151 auf einer SIM-Karte abgespeichert sein. So kann der Belegsdatenspeicher 151 beispielsweise die 16 Sektoren einer Mifare-Chipkarte umfassen und es können beispielsweise in jeden dieser Sektoren Kreditbelegsdaten abgespeichert werden. Schliesslich kann der Belegsdatenspeicher 151 auch als Datenstruktur auf einem zentralen Server, zum Beispiel in einem HLR (HLR: Home Location Register) eines Mobilfunkanbieters, abgespeichert sein, wobei bei Bedarf mittels der Elektronikmittel 15 und den Mobilfunkmittel 12 auf den im zentralen Server abgespeicherten Belegsdatenspeicher zugegriffen werden kann.

In Figur 1 bezieht sich das Bezugszeichen 6 auf ein Kommunikationsnetzwerk. Das Kommunikationsnetzwerk 6 kann beispielsweise als Mobilfunknetz, z.B. als GSM Netz, als UMTS Netz, als satellitenbasiertes Mobilfunknetz oder als irgendein anderes Kommunikationsnetzwerk ausgeführt sein. Bei einer entsprechenden Verfügbarkeit am mobilen Endgerät 1 und einem aktuellen Standort des mobilen Endgeräts 1 kann der Zugang auf das Kommunikationsnetzwerk 6 beispielsweise auch über ein WLAN Netzwerk (WLAN: Wireless Local Area Network) erfolgen. Es sei bemerkt, dass es für die Durchführung des erfindungsgemässen Zahlungsverfahrens unwesentlich ist, ob zum Zeitpunkt des Kaufs von Produkten und/oder Dienstleistungen am Standort des Dienstterminals 2 ein Kommunikationsnetzwerk 6 verfügbar ist oder nicht.

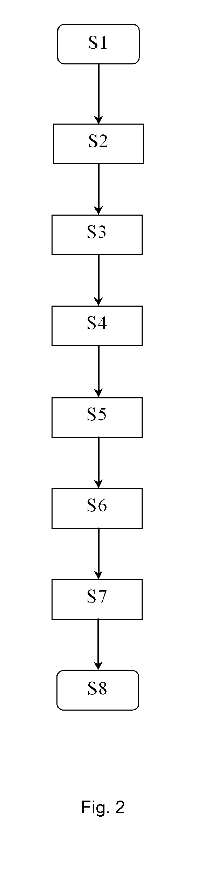

In Figur 2 beziehen sich die Schritte S1, S2, S3, usw. auf ein Beispiel für die Durchführung des erfindungsgemässen Zahlungsverfahrens. Dieses Beispiel schränkt den Schutzumfang der beanspruchten Erfindung allerdings nicht ein, sondern dient nur der Veranschaulichung des erfindungsgemässen Zahlungsverfahrens.

In Schritt S1 wird der erwähnte Belegsdatenspeicher 151 aufgeladen. Dazu kann beispielsweise mittels der am mobilen Endgerät 1 angebrachten Eingabemittel 13 und Anzeigemittel 14 ein Kreditkartenkonto oder irgendein anderes Konto ausgewählt werden und mittels eines entsprechenden Protokolls zwischen dem Herausgeber des Kontos und dem mobilen Endgerät 1 können Kreditbelegsdaten auf den Belegsdatenspeicher 151 aufgeladen werden. Im Falle eines Prepaid Verfahrens kann dieses Aufladen kann als Inkasso bezeichnet werden und kann als Aufladen eines Prepaid-Kontos betrachtet werden. Im Falle eines Postpaid Verfahrens umfassen die Kreditbelegsdaten alle notwendigen Informationen, wie beispielsweise eine Kontoidentifikation, um einem Konto einen Geldbetragswert zu belasten. Eine solche Kontoidentifikation kann beispielsweise eine Identifikation einer Bank und eine Identifikation eines Kontos dieser Bank umfassen. Die Kreditbelegsdaten können für eine einmalige Verwendung strukturiert sein, beispielsweise durch die Angabe eines einmalig verwendbaren Kontos, oder die Kreditbelegsdaten können für eine mehrmalige Verwendung strukturiert sein, beispielsweise durch die Angabe einer festen Kontonummer. Im Falle eines Prepaid Verfahrens kann beispielsweise bei einem solchen Aufladen des Belegsdatenspeichers 151 ein Geldbetragswert von 100 Schweizerfranken aufgeladen werden. Dieser Geldbetragswert von 100 Schweizerfranken kann beispielsweise als anonymes elektronisches Geld in der Form von signierten 10 Rappen Werten im Belegsdatenspeicher 151 abgespeichert werden. Dieser Geldbetragswert kann aber auch in einem einzelnen Kreditbelegsdatensatz abgespeichert werden. Die Kreditbelegsdaten können beispielsweise signiert sein, wobei aus der Signatur beispielsweise der Herausgeber des elektronischen Geldes oder der Herausgeber eines Kontos identifiziert werden kann. Die Kreditbelegsdaten können verschlüsselt sein, sodass durch das mobile Endgerät 1 die Kreditbelegsdaten nicht gelesen werden können. Das Aufladen des Belegsdatenspeichers 151 kann beispielsweise auch über die Nahbereichs-Schnittstelle 11 des mobilen Endgeräts 1 erfolgen, indem beispielsweise an einem Verkaufsautomaten für elektronisches Geld ein Geldbetrag in Form von Münzen oder Geldscheinen eingeführt wird. Der Verkaufsautomat für elektronisches Geld kann eingerichtet sein um eine dem eingeführten Geldbetrag entsprechende Menge von elektronischem Geld zu erzeugen und über die Nahbereichs-Schnittstellen 21,11 zum Aufladen des Belegsdatenspeichers 151 an das mobile Endgerät 1 zu übertragen. Das Aufladen des Belegsdatenspeichers 151 kann mit einem Authentifizierungsschritt, wie der Eingabe eines PIN (PIN: Personal Identification Number), zusätzlich gesichert werden, sodass beispielsweise nur bei der Angabe eines korrekten PIN die Abspeicherung von Kreditbelegsdaten im Belegsdatenspeicher erfolgen kann.

Im Schritt S2 wird die Nahbereichs-Schnittstelle 11 des mobilen Endgeräts 1 in den Wirkungsbereich einer Nahbereichs-Schnittstelle 21 eines Dienstterminals 2 gebracht. Sobald die Nahbereichs-Schnittstellen 11,21 gemäss einem Protokoll die gegenseitige Verfügbarkeit überprüft haben, kann beispielsweise eine gegenseitige Identifikation des mobilen Endgeräts 1 gegenüber dem Dienstterminal 2 und des Dienstterminals 2 gegenüber dem mobilen Endgerät 1 erfolgen. Eine solche gegenseitige Identifikation kann auf der Übermittlung einer Identifikation des Dienstterminals 2 und auf der Übermittlung einer Identifikation des mobilen Endgeräts 1 basieren. Eine solche Identifikation ist allerdings optional, kann aber für die Sicherheit des erfindungsgemässen Zahlungsverfahrens Vorteile haben. Im Schritt S2 können Kreditbelegsdaten vom mobilen Endgerät 1 an das Dienstterminal 2 übermittelt werden. Die Kreditbelegsdaten können wie erwähnt die Signatur eines Herausgebers von elektronischen Geldwerten sowie weitere Angaben über den auf dem mobilen Endgerät 1 abgespeicherten Belegsdatenspeicher 151 umfassen. Die Kreditbelegsdaten können mittels eines Überprüfungsmoduls des Dienstterminals 2 überprüft werden, sodass beispielsweise durch das Dienstterminal 2 nur Kreditbelegsdaten mit bestimmten Identifikationen eines Kontoherausgebers zugelassen werden. Ein solches Überprüfungsmodul kann insbesondere als Softwaremodul, welches in einer Betriebssystemumgebung des Dienstterminals oder des Verkaufsautomaten 2 als Applikation abarbeitbar ist, ausgeführt sein. Falls die Überprüfung der Kreditbelegsdaten nicht erfolgreich ist, beispielsweise weil eine unbekannte Signatur eines Herausgebers von Kreditbelegsdaten festgestellt wurde, dann kann das Verfahren für die Bezahlung von Produkten und/oder Dienstleistungen durch ein entsprechendes Modul des Dienstterminals oder Verkaufsautomaten 2 abgebrochen werden.

Im Schritt S3 kann beispielsweise optional ein elektronischer Produktkatalog vom Dienstterminal 2 auf das mobile Endgerät 1 übermittelt werden. Aufgrund des elektronischen Produktkatalogs kann beispielsweise durch eine menugeführte Eingabe ein Produkt und/oder eine Dienstleistung, welche am Point-of-Sale des Dienstterminals oder welche vom Verkaufsautomaten 2 angeboten werden, direkt auf dem mobilen Endgerät 1 selektiert werden. Selbstverständlich kann die Selektion eines Produkts auch direkt am Dienstterminal 2, beispielsweise mittels der Selektionsmittel des Selektions- und Bezahlmoduls 23, erfolgen.

Im Schritt S4 kann ein Selektionsbeleg betreffend der durch den Benutzer ausgewählten Produkte- und/oder Dienstleistungen erstellt werden. Der Selektionsbeleg kann beispielsweise durch das Dienstterminal 2 oder durch das mobile Endgerät erstellt werden und gegebenenfalls zwischen dem Dienstterminal 2 und dem mobilen Endgerät 1 übermittelt werden. Eine Übermittlung ist insbesondere dann vorteilhaft, falls Produkte-und/oder Dienstleistungen mittels Mittel des Dienstterminals 2 selektiert werden und ein Selektionsbeleg zu einer weiteren Verarbeitung oder Kontrolle vom Dienstterminal 2 auf das mobile Endgerät 1 übermittelt werden soll. Ein solcher Selektionsbeleg kann beispielsweise die Nummer eines Produkts und/oder eine Dienstleistung des Dienstterminals 2 umfassen.

Im Schritt S5 werden beispielsweise aufgrund des im Schritt S4 erstellten Selektionsbelegs Kreditbelegsdaten vom Belegsdatenspeicher 151 des mobilen Endgeräts auf das Dienstterminal 2 übermittelt. Es können im Schritt S5 beispielsweise aber auch nur auf Grund einer Identifikation des Dienstterminals 2 und ohne eine weitere Überprüfung Kreditbelegsdaten aus dem Belegsdatenspeicher 151 an das Dienstterminal 2 übermittelt werden. Durch das mobile Endgerät 1 kann beispielsweise aufgrund eines in einem elektronischen Produktkatalog abgespeicherten Geldbetragswerts bestimmt werden, welche Kreditbelegsdaten an das Dienstterminal 2 zu übermitteln sind. Es können aber auch durch das Dienstterminal 2 spezifische Anforderungen, beispielsweise bezüglich eines minimalen Geldbetragswerts, bezügliche der Kreditbelegsdaten an das mobile Endgerät 1 übermittelt werden. Ein Geldbetragswert kann beispielsweise mittels einer auf dem Dienstterminal 2 abgespeicherten Tabelle und einer Abfrage dieser Tabelle sowie mittels einer elektronischen Kommunikation zwischen entsprechenden Modulen des mobilen Endgeräts 1 und des Dienstterminals 2 bestimmt werden. Statt einer Übermittlung von Kreditbelegsdaten kann eine Abbuchung des Geldbetragswerts beispielsweise unmittelbar durch eine Markierung von auf dem mobilen Endgerät abgespeicherten Kreditbelegsdaten erfolgen. Die markierten Kreditbelegsdaten können beispielsweise anschliessend zusammen mit einer Identifikation des abgebuchten Geldbetragswertes, einer Identifikation des selektierten Produktes und/oder Dienstleistung, einer Identifikation des mobilen Endgeräts 1, und/oder einer Identifikation des Dienstterminals 2 an das Dienstterminal 2 übermittelt werden.

Im Schritt S6 werden die übermittelten Kreditbelegsdaten auf dem Dienstterminal 2 überprüft. Zur Überprüfung können die Kreditbelegsdaten beispielsweise mittels eines auf dem Dienstterminal 2 abgespeicherten elektronischen Schlüssels entschlüsselt werden. Die entschlüsselten Kreditbelegsdaten können auf die Angabe eines Postpaid oder eines Prepaid Kontos überprüft werden und es kann eine entsprechende Belastungsinstruktion oder ein entsprechender Abzug eines Geldbetragswertes erstellt werden. Bei einem Prepaid Verfahren können die Kreditbelegsdaten ein Guthaben umfassen, wobei durch das Dienstterminal 2 ein Geldwertbetrag von diesem Guthaben abgebucht wird, Kreditbelegsdaten mit dem abgebuchten Guthaben erstellt, verschlüsselt und an das mobile Endgerät für eine Abspeicherung im Belegsdatenspeicher 151 übermittelt werden. Sowohl bei einem Prepaid Verfahren als auch bei einem Postpaid Verfahren können aufgrund der zum Kauf ausgewählten Produkte und/oder Dienstleistungen Abbuchungsdaten erstellt werden. Die Abbuchungsdaten können beispielsweise eine Identifikation eines Anbieters, einen Geldwertbetrag und eine Identifikation eines Prepaid oder eines Postpaid Kontos umfassen. Die Abbuchungsdaten können vom Dienstterminal 2 auf das mobile Endgerät 1 übertragen werden. Selbstverständlich können die Abbuchungsdaten zusätzlich die wie erwähnt abgebuchten Kreditbelegsdaten umfassen, wobei die abgebuchten Kreditbelegsdaten im mobilen Endgerät 1 abgespeichert werden können.

Im Schritt S7 wird mittels des Dienstterminals 2 ein Signal für die Freigabe der zum Kauf ausgewählten Produkte und/oder Dienstleistungen eingeschaltet. Dieses Signal kann beispielsweise die automatische Erzeugung eines frisch zubereiteten Getränks, die Abgabe einer Getränkedose, die Bedruckung einer Fahrkarte, das Freigeben eines Drehkreuzes oder eine Anzeigemeldung auf einem Display des Dienstterminals 2 auslösen. So kann beispielsweise an einer Kasse eines Supermarkts dem Personal des Supermarkts und/oder dem Benutzer des mobilen Endgeräts 1 angezeigt werden, dass die Abbuchung der Zahlung erfolgreich war und damit der Besitz der ausgewählten Produkte und/oder Dienstleistungen auf den Benutzer übergegangen ist.

Im Schritt S8 werden zumindest Teile der Abbuchungsdaten vom mobilen Endgerät 1 an eine Zentrale 3 übermittelt. Die Übermittlung der Abbuchungsdaten kann beispielsweise über ein Mobilfunknetz 6 erfolgen. Die Übermittlung der Abbuchungsdaten kann zu irgendeinem Zeitpunkt erfolgen, beispielsweise zu einem Zeitpunkt mit hoher Verfügbarkeit und geringer Auslastung des Mobilfunknetzes 6. Eine solche Übermittlung von Abbuchungsdaten kann als die Übermittlung von Clearing-Informationen bezeichnet werden. Mittels eines Auswertungsmoduls der Zentrale 3 können die Abbuchungsdaten ausgewertet werden. Eine solche Auswertung kann insbesondere einen Geldbetragswert umfassen, welcher einem Prepaid Konto belastet wurde oder einen Geldbetragswert und Kontoinformationen umfassen, welcher einem Postpaid Konto zu belasten ist. Aufgrund der Auswertung können Geldbetragswerte den entsprechenden Konten 411,421,431 von Produkt- und/oder Dienstleistungsanbietern 41,42,43 gutgeschrieben werden und/oder es kann eine entsprechende Belastung eines Prepaid- oder eines Postpaid-Kontos durchgeführt werden. Eine solche Gutschrift von Geldwerten kann als Clearing bezeichnet werden.

Insbesondere für den Fall eines Verkaufsautomaten, welcher nur ein einzelnes Produkt oder eine einzelne Dienstleistung zur Auslieferung anbietet, also z.B. einem Kaffeeautomaten oder dem Zugangsautomaten für eine öffentliche Toilette, sei es erwähnt, dass die erfindungsgemässe Selektion von Produkten und/oder Dienstleistungen des Verkaufsautomaten und die Erstellung eines Selektionsbelegs auch implizit erfolgen kann. So kann der Verkaufsautomat beispielsweise in regelmässigen Intervallen eine Kennung des angebotenen Produkts oder der angebotenen Dienstleistung über die Nahbereichs-Schnittstelle aussenden. Sobald sich ein mobiles Endgerät in den Wirkungsbereich der Nahbereichs-Schnittstelle befindet, kann der Benutzer durch irgendwelche Mittel, beispielsweise durch ein Vibrationszeichen und einer Anzeige auf dem Display, aufgefordert werden, den Bezug des Produkts oder der Dienstleistung zu bestätigen, beispielsweise durch ein Drücken einer Taste des mobilen Endgeräts, wodurch die Abbuchung eines Geldbetragswerts, die Übermittlung des Abbuchungsbelegs und die Auslieferung des Produkts oder der Dienstleistung ausgelöst wird.

Insbesondere bei der Bezahlung von Dienstleistungen an einem Verkaufsautomaten 2 mit einem Bestand von darin angeordneten Produkten können die an die Zentrale übermittelten Abbuchungsdaten detaillierte Informationen über die gekauften Produkte umfassen. Für eine weitere Kontrolle können die Abbuchungsdaten beispielsweise auch den aktuellen Bestand der im Verkaufsautomaten angeordneten Produkte umfassen. Auf der Zentrale können die Abbuchungsdaten entsprechend ausgewertet werden und/oder an die entsprechenden Anbieter 41,42,43 übermittelt werden. Auf der Zentrale 3 oder auf Systemen der Anbieter 41,42,43 können Datenbanken eingerichtet sein, um eine optimale Bewirtschaftung von einer Infrastruktur von Verkaufsautomaten 2 zu ermöglichen. Solche Datenbanken zur Bewirtschaftung von Verkaufsautomaten 2 können insbesondere Einträge der Standorte der Datenbanken, Einträge der Standorte von Lagerräumen mit den in den Verkaufsautomaten 2 angeordneten Produkten, Einträge mit Standorten und der zeitlichen Verfügbarkeit von Servicetechnikern, Einträge mit einer gewünschten Anzahl von Produkten, welche in den Verkaufsautomaten 2 minimal angeordnet sein sollten und/oder Einträge über die Bezugsfrequenz von in einem Verkaufsautomaten 2 angeordneten Produkten. Die Bezugsfrequenz von in einem Verkaufsautomaten 2 angeordneten Produkten kann sich beispielsweise mit der Jahreszeit ändern oder kann beispielsweise davon abhängen, ob der Verkaufsautomat an einem Bahnhof oder in einem Kino angeordnet ist. Durch eine Auswertung der Datenbanken kann eine optimale Bewirtschaftung derart erzielt werden, dass der Servicetechniker keine unnötigen Wegstrecken fährt, dass der Servicetechniker bei einer Fahrt mit den korrekten Produkten ausgerüstet ist, dass die Gesamtweglänge des Servicetechnikers minimiert wird oder dass der Servicetechniker zu einem Zeitpunkt aufgeboten wird, bei welchem noch genügend Zeit verbleibt, um die Produkte des Verkaufsautomaten nachzufüllen. Selbstverständlich wird es durch eine Auswertung der Datenbanken auch möglich sein, auf besondere Bedürfnisse des Servicetechnikers wie beispielsweise auf flexible Arbeitszeiten, spezifisch Rücksicht zu nehmen. Eine solche Bewirtschaftung von Verkaufsautomaten 2 kann insbesondere zu einer wesentlichen Ersparnis von Aufwand und Kosten führen. Die Übertragung der detaillierten Informationen über die gekauften Produkte und/oder Dienstleistungen kann unabhängig vom Zahlungsverfahren oder auch ohne ein Zahlungsverfahren erfolgen.

## Patentansprüche

1. Zahlungsverfahren zur Bezahlung von Produkten und/oder Dienstleistungen, wobei ein Point-of-Sale ein Dienstterminal (2) umfasst, und wobei ein Benutzer Produkte und/oder Dienstleistungen am Point-of-Sale zum Kauf auswählt,
**dadurch gekennzeichnet,**
**dass** Kreditbelegsdaten eines Belegsdatenspeichers (151) eines mobilen Endgeräts (1) des Benutzers vom mobilen Endgerät (1) über eine Nahbereichs-Schnittstelle (11) des mobilen Endgeräts (1) an eine Nahbereichs-Schnittstelle (21) des Dienstterminals (2) übertragen werden, dass auf dem Dienstterminal (2) aufgrund der Kreditbelegsdaten und aufgrund der zum Kauf ausgewählten Produkte und/oder Dienstleistungen Abbuchungsdaten erstellt werden,
**dass** die Abbuchungsdaten vom Dienstterminal (2) über die Nahbereichs-Schnittstellen (21,11) an das mobile Endgerät (1) übertragen werden, und
**dass** aufgrund der Übermittlung der Abbuchungsdaten mittels des Dienstterminals (2) ein Signal für die Freigabe der zum Kauf ausgewählten Produkte und/oder Dienstleistungen eingeschaltet wird.

2. Verfahren nach Anspruch 1, **dadurch gekennzeichnet, dass** die Kreditbelegsdaten und/oder die Abbuchungsdaten mindestens teilweise mittels eines auf dem Dienstterminal (2) abgespeicherten elektronischen Schlüssels entschlüsselt und/oder verschlüsselt werden.

3. Verfahren nach einem der Ansprüche 1 bis 2, **dadurch gekennzeichnet, dass** Kreditbelegsdaten umfassend eine Kontoinformation eines Geldkontos und/oder umfassend einen Geldbetragswert eines Guthabenkontos verwendet werden.

4. Verfahren nach einem der Ansprüche 1 bis 3, **dadurch gekennzeichnet, dass** Abbuchungsdaten umfassend eine Anbieteridentifikation verwendet werden, wobei die Abbuchungsdaten vom mobilen Endgerät (1) bei einer Verfügbarkeit eines Kommunikationsnetzwerks (6) an eine Zentrale (3) übermittelt werden, und wobei mittels der Zentrale (3) aufgrund der Abbuchungsdaten ein Geldbetragswert einem Konto (411,421,431) des der Anbieteridentifikation entsprechenden Anbieters (41,42,43) von Produkten und/oder Dienstleistungen gutgeschrieben wird.

5. Verfahren nach einem der Ansprüche 1 bis 4, **dadurch gekennzeichnet, dass** Abbuchungsdaten umfassend eine Produkt- und/oder Dienstleistungsidentifikation, eine Zeitangabe, eine Transaktionsidentifikation und/oder eine Kreditbelegsdatenidentifikation verwendet werden.

6. Verfahren nach einem der Ansprüche 1 bis 5, **dadurch gekennzeichnet, dass** aufgrund der Übermittlung der Abbuchungsdaten zusätzliche, zumindest teilweise unverschlüsselte Informationsdaten vom Dienstterminal (2) an das mobile Endgerät (1) übermittelt werden.

7. Verfahren nach einem der Ansprüche 1 bis 6, **dadurch gekennzeichnet, dass** ein elektronischer Katalog mit verfügbaren Produkten und/oder Dienstleistungen über die Nahbereichs-Schnittstellen (11,21) vom Dienstterminal (2) an das mobile Endgerät (1) übermittelt wird.

8. Verfahren nach einem der Ansprüche 1 bis 7, **dadurch gekennzeichnet, dass** Inhaberdaten betreffend des Inhabers des mobilen Endgeräts (1) und/oder dass eine Identifikation des mobilen Endgeräts (1) vom mobilen Endgerät (1) über die Nahbereichs-Schnittstellen (11,21) an das Dienstterminal (2) übermittelt werden.

9. Verfahren nach einem der Ansprüche 1 bis 8, **dadurch gekennzeichnet, dass** als Nahbereichs-Schnittstelle (11,21) eine NFC (Near Field Communication) Schnittstelle, eine RFID (Radio Frequency Identification) Schnittstelle, eine Bluetooth Schnittstelle und/oder eine IrDA (Infrared Data Association) Schnittstelle verwendet wird.

10. Verfahren nach einem der Ansprüche 1 bis 9, **dadurch gekennzeichnet, dass** zumindest Teile der Kreditbelegsdaten und/oder der Abbuchungsdaten einer Identifikation des mobilen Endgeräts (1) zugeordnet in einem Speichermodul des Verkaufsautomaten (2) abgespeichert werden.

11. Zahlungssystem zur Bezahlung von Produkten und/oder Dienstleistungen, wobei ein Point-of-Sale ein Dienstterminal (2) umfasst, und wobei Produkte und/oder Dienstleistungen am Point-of-Sale durch einen Benutzer auswählbar sind, **dadurch gekennzeichnet,**
**dass** Kreditbelegsdaten eines Belegsdatenspeichers (151) eines mobilen Endgeräts (1) des Benutzers vom mobilen Endgerät (1) über eine Nahbereichs-Schnittstelle (11) des mobilen Endgeräts (1) an eine Nahbereichs-Schnittstelle (21) des Dienstterminals (2) übertragbar sind, dass auf dem Dienstterminal (2) aufgrund der Kreditbelegsdaten und aufgrund der zum Kauf ausgewählten Produkte und/oder Dienstleistungen Abbuchungsdaten erstellbar sind,
**dass** die Abbuchungsdaten vom Dienstterminal (2) über die Nahbereichs-Schnittstellen (21,11) an das mobile Endgerät (1) übertragbar sind, und
**dass** aufgrund der Übermittlung der Abbuchungsdaten mittels des Dienstterminals (2) ein Signal für die Freigabe der zum Kauf ausgewählten Produkte und/oder Dienstleistungen einschaltbar ist.

12. System nach Anspruch 11, **dadurch gekennzeichnet, dass** die Kreditbelegsdaten und/oder die Abbuchungsdaten mindestens teilweise mittels eines auf dem Dienstterminal (2) abgespeicherten elektronischen Schlüssels entschlüsselbar und/oder verschlüsselbar sind.

13. System nach einem der Ansprüche 11 bis 12, **dadurch gekennzeichnet, dass** Kreditbelegsdaten umfassend eine Kontoinformation eines Geldkontos und/oder umfassend einen Geldbetragswert eines Guthabenkontos verwendbar sind.

14. System nach einem der Ansprüche 11 bis 13, **dadurch gekennzeichnet, dass** Abbuchungsdaten umfassend eine Anbieteridentifikation verwendbar sind, wobei die Abbuchungsdaten vom mobilen Endgerät (1) bei einer Verfügbarkeit eines Kommunikationsnetzwerks (6) an eine Zentrale (3) übermittelbar sind, und wobei mittels der Zentrale (3) aufgrund der Abbuchungsdaten ein Geldbetragswert einem Konto (411,421,431) des der Anbieteridentifikation entsprechenden Anbieters (41,42,43) von Produkten und/oder Dienstleistungen gutschreibbar sind.

15. System nach einem der Ansprüche 11 bis 14, **dadurch gekennzeichnet, dass** Abbuchungsdaten umfassend eine Produkt- und/oder Dienstleistungsidentifikation, eine Zeitangabe, eine Transaktionsidentifikation und/oder eine Kreditbelegsdatenidentifikation verwendbar sind.

16. System nach einem der Ansprüche 11 bis 15, **dadurch gekennzeichnet, dass** aufgrund der Übermittlung der Abbuchungsdaten zusätzliche, zumindest teilweise unverschlüsselte Informationsdaten vom Dienstterminal (2) an das mobile Endgerät (1) übermittelbar sind.

17. System nach einem der Ansprüche 11 bis 16, **dadurch gekennzeichnet, dass** ein elektronischer Katalog mit verfügbaren Produkten und/oder Dienstleistungen über die Nahbereichs-Schnittstellen (11,21) vom Dienstterminal (2) an das mobile Endgerät (1) übermittelbar ist.

18. System nach einem der Ansprüche 11 bis 17, **dadurch gekennzeichnet, dass** Inhaberdaten betreffend des Inhabers des mobilen Endgeräts (1) und/oder dass eine Identifikation des mobilen Endgeräts (1) vom mobilen Endgerät (1) über die Nahbereichs-Schnittstellen (11,21) an das Dienstterminal (2) übermittelbar sind.

19. System nach einem der Ansprüche 11 bis 18, **dadurch gekennzeichnet, dass** als Nahbereichs-Schnittstelle (11,21) eine NFC (Near Field Communication) Schnittstelle, eine RFID (Radio Frequency Identification) Schnittstelle, eine Bluetooth Schnittstelle und/oder eine IrDA (Infrared Data Association) Schnittstelle verwendbar ist.

20. System nach einem der Ansprüche 11 bis 19, **dadurch gekennzeichnet, dass** zumindest Teile der Kreditbelegsdaten und/oder der Abbuchungsdaten einer Identifikation des mobilen Endgeräts (1) zugeordnet in einem Speichermodul des Verkaufsautomaten (2) abspeicherbar sind.

21. Mobiles Endgerät (1) zur Ausführung des Zahlungsverfahrens nach einem der Ansprüche 1 bis 10, **dadurch gekennzeichnet, dass** Kreditbelegsdaten eines Belegsdatenspeichers (151) des mobilen Endgeräts (1) vom mobilen Endgerät (1) über eine Nahbereichs-Schnittstelle (11) des mobilen Endgeräts (1) an eine Nahbereichs-Schnittstelle (21) des Dienstterminals (2) übertragbar sind, dass Abbuchungsdaten des Dienstterminals (2) über die Nahbereichs-Schnittstellen (21,11) vom mobilen Endgerät (1) empfangbar sind.

22. Dienstterminal (2) zur Ausführung des Zahlungsverfahrens nach einem der Ansprüche 1 bis 10, **dadurch gekennzeichnet, dass** Kreditbelegsdaten eines Belegsdatenspeichers (151) eines mobilen Endgeräts (1) vom Dienstterminal (2) empfangbar sind, dass auf dem Dienstterminal (2) aufgrund der Kreditbelegsdaten und aufgrund von zum Kauf ausgewählten Produkte und/oder Dienstleistungen Abbuchungsdaten erstellbar sind, dass die Abbuchungsdaten vom Dienstterminal (2) über die Nahbereichs-Schnittstellen (21,11) an das mobile Endgerät (1) übertragbar sind, und
dass aufgrund der Übertragung der Abbuchungsdaten mittels des Dienstterminals (2) ein Signal für die Freigabe der zum Kauf ausgewählten Produkte und/oder Dienstleistungen einschaltbar ist.
